(19) Europäisches Patentamt
European Patent Office
Office européen des brevets

(11) **EP 4 503 030 A1**

(12) **EUROPEAN PATENT APPLICATION**

(43) Date of publication:
**05.02.2025 Bulletin 2025/06**

(21) Application number: **23188806.6**

(22) Date of filing: **31.07.2023**

(51) International Patent Classification (IPC):
**G10L 25/51** (2013.01)       **G06V 40/40** (2022.01)
**G10L 25/30** (2013.01)       **G06N 3/02** (2006.01)

(52) Cooperative Patent Classification (CPC):
**G10L 25/51; G06N 3/02; G06V 10/82; G06V 20/95;
G06V 40/40; G10L 25/30**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **My Voice AI Limited
London EC3M 5JD (GB)**

(72) Inventor: **WILLIAMS, Jennifer
Southampton, SO17 2EY (GB)**

(74) Representative: **Gill Jennings & Every LLP
The Broadgate Tower
20 Primrose Street
London EC2A 2ES (GB)**

(54) **A METHOD OF ANTI-SPOOFING**

(57)     A method of anti-spoofing for identifying the authenticity of sub-periods of an audio or video signal, the method comprising: receiving an audio or video signal having a time period comprising a plurality of sub-periods; applying a trained encoder, the trained encoder configured to output an n-dimensional array of continuous values parameterising the authenticity of each sub-period, wherein the encoder is trained as part of an autoencoder, the autoencoder having at least one encoder, at least one vector quantised codebook, and at least one decoder; and outputting an indication of the authenticity of at least one sub-period based on the n-dimensional array and the at least one vector quantised codebook; wherein the autoencoder is trained using training data comprising a set of training audio or video signals, sub-periods of the training audio or video signals being associated with respective labels of whether said sub-periods are real or fake.

2'

FIG. 4

**Description**

**FIELD OF THE INVENTION**

The present invention relates to methods of anti-spoofing for identifying the authenticity of audio or video signals and to methods of training an encoder to identify the authenticity of audio or video signals.

**BACKGROUND**

It is advantageous to be able to detect the authenticity of signals, particularly for security and authentication purposes. However, often when a signal is faked, only parts of the signal are altered rather than the entirety of the signal. For example, if there was a desire to fake a voice recording, a section (e.g., an individual word or short phrase) of the original signal may be replaced with a synthesised or separately recorded piece of audio. Such a signal may be referred to as a partially spoofed signal.

In typical anti-spoofing methods, algorithms can only determine authenticity based on the signal as a whole, providing a single indication of the authenticity of the signal as a whole rather than providing a fine-grained analysis of which parts of a signal are real and which are fake. Particularly if the fake section is of a very short duration compared to the overall length of the signal, the entire signal may erroneously be identified as real (or vice versa).

In order to detect which part of a partially spoofed signal is fake (a process known as "partial anti-spoofing"), the signal is typically cut into a number of slices for individual testing. While this may eventually indicate the faked part, it requires the operator to decide a window size in the first instance, and test each window slice of the signal separately, making multiple passes through the detection algorithm. Changing the window size or slice of the audio file then requires another set of passes through the detection algorithm.

This is very inefficient and may not work well on fine-grained segments such as several audio frames or detecting only a short word that has been faked. It is also an inappropriate method for performing partial anti-spoofing on edge devices or for real-time or near real-time anti-spoofing owing to this inefficiency and due to the need to manually set the window size.

Therefore, it is an object of the present invention to provide improved anti-spoofing techniques which address the problems discussed above.

**SUMMARY OF INVENTION**

According to a first aspect of the present invention there is provided a method of anti-spoofing for identifying the authenticity of sub-periods of an audio or video signal, the method comprising: receiving an audio or video signal having a time period comprising a plurality of sub-periods; applying a trained encoder, the trained encoder configured to output an n-dimensional array of continuous values parameterising the authenticity of each sub-period, wherein the encoder is trained as part of an autoencoder, the autoencoder having at least one encoder, at least one vector quantised codebook, and at least one decoder; and outputting an indication of the authenticity of at least one sub-period based on the n-dimensional array and the at least one vector quantised codebook; wherein the autoencoder is trained using training data comprising a set of training audio or video signals, sub-periods of the training audio or video signals being associated with respective labels of whether said sub-periods are real or fake.

By having the output from the method being an indication of authenticity of sub-periods of the signal, it may be possible to immediately determine which parts of the signal are real or fake by only applying the method a single time. In other words, only a single inference pass is required in order to output an indication of authenticity of sub-periods of the signal. This is in contrast to methods which simply indicate whether the signal as a whole is real or fake; in such methods, the signal must be manually divided into shorter sections and the method iteratively applied in order to identify the authenticity of shorter sections.

Furthermore, by only requiring a single inference pass the method above is made more computationally efficient, which means that it can be run in (near) real-time and is suitable for running on edge devices. By contrast, in existing methods that require multiple passes, partial anti-spoofing would need a significant amount of computing power, which means that these existing methods are not suitable for running on edge devices.

While the n-dimensional array parameterises the authenticity of each sub-period, the vector quantised codebook is used to provide the indication of authenticity. The n-dimensional array may be quantised onto vectors stored in the vector quantised codebook, where each codebook vector identifies the sub-period as either real or fake.

As used herein, the term "array" may refer to either a 1-dimensional array (a vector), or an array with two or more dimensions. It will be appreciated that any array or vector described herein may be "reshaped" or "flattened" throughout the method, such as to change the number of dimensions, without changing the underlying principles of operation.

Preferably, the output indication comprises a 1-dimensional array with each entry corresponding to a sub-period of the signal. In this way, the authenticity for any part of the input signal can be determined simply by looking at the corresponding portion of the 1-dimensional array. Preferably, each entry of the 1D array takes either a first value indicating that the sub-period is real, or a second value indicating that the sub-period is fake. For example, a "0" may indicate that the sub-period is real, and a "1" may indicate that the sub-period is fake (or vice versa). Advantageously, by providing a 1D array that may take two values as outputs, it may be easy to interpret the 1D array to determine which sub-periods of the array are real and fake. Furthermore, by using binary digits as the two possible output values, the 1D array may be readily used by a computer without the digits needing to be converted to binary. Alternatively, the encoder may be trained so that each entry can take three or more values, such as to indicate other characteristics of the signal relating to its authenticity.

Preferably, the autoencoder is a vector quantised autoencoder, where the n-dimensional array contains a plurality of vectors corresponding to each sub-period of the signal, each vector being quantised onto a codebook vector stored in a codebook, and each codebook vector having a codebook index identifying it as real or fake, wherein each entry of the 1D array is based on a corresponding codebook index. Preferably, each entry of the 1D array is the corresponding codebook index. The codebook index may be referred to herein as a "code" or a "VQ code". Since the authenticity of a signal is generally a discrete criterion (i.e., each subperiod is either real or fake), it is particularly suitable to use an autoencoder with a quantised latent space, since the codebook vectors also provide discrete representations. It is also more computationally efficient, since it is only necessary to determine and store the authenticity of a finite number of codebook vectors, rather than needing to define the authenticity of all the continuous points in the latent space. Therefore, using a vector quantised autoencoder reduces the required amount of data storage, processing resources, and/or transmission resources.

Preferably, the autoencoder is a vector quantised variational autoencoder (VQ-VAE). However, any autoencoder with a quantised latent space may be used.

Preferably, the trained encoder is a trained spoof encoder, and the method further comprises applying a trained content encoder configured to generate a second, m-dimensional array of values parameterising the content of each sub-period, wherein the second encoder is trained as part of the autoencoder. In this way, it is possible to generate a representation of the content of each sub-period. Since the output of the spoof-encoder does not typically allow the original signal to be constructed, the content encoder may be used during the training process so that the original signal can be reproduced.

The method may further comprise: quantising the output of the spoof encoder onto vectors in a first set of codebook vectors stored in a first codebook, the first codebook representing the authenticity of the first set of codebook vectors; quantising the output of the content encoder onto vectors in a second set of codebook vectors stored in a second codebook, the second codebook representing the content of the second set of codebook vectors; and applying at least one decoder to the quantised vectors from the spoof encoder and the content encoder to generate a reproduction of the signal. In this way, the reproduction of the signal may be compared to the original signal during training, thereby allowing the components of the system (the encoders, the codebooks and the decoder) to be updated in order to better reproduce the signal.

According to a second aspect of the present invention there is provided a method of training an encoder as part of an autoencoder to identify the authenticity of sub-periods of an audio or video signal, the method comprising: providing a set of training signals, each training signal having a plurality of sub-periods associated with a respective plurality of labels of whether the sub-period is real or fake, and for each training signal, performing the steps of: applying a first encoder to the training signal, the first encoder configured to output an n-dimensional array of continuous values parameterising the authenticity of each sub-period; quantising the output of the first encoder onto vectors in a first set of codebook vectors stored in a first codebook, the first codebook representing the authenticity of the first set of codebook vectors; using an auxiliary classifier to output an indication of the authenticity of at least one sub-period based on the codebook vectors; applying a second encoder to the training signal, the second encoder configured to output an m-dimensional array of continuous values parameterising the content of each sub-period; quantising the output of the second encoder onto vectors in a second set of codebook vectors stored in a second codebook, the second codebook representing the content of the second set of codebook vectors; applying at least one decoder to the quantised vectors from the first encoder and the second encoder to generate a reproduction of the training signal; and adjusting at least one of the encoders, the decoder, the codebooks and the auxiliary classifier using the reproduction of the training signal, the original training signal, the plurality of labels, and the output indication.

Once trained, components such as the second encoder, the auxiliary classifier and the decoder are not necessarily required in order to provide an indication of authenticity. However, during training these components allow the original signal to be reconstructed and therefore trained. By training the auxiliary classifier at the same time as training the encoders, the decoder and the codebooks, the content of the codebooks is guided towards meaningful vectors that may be more easily distinguished by the auxiliary classifier. Therefore, this training method prevents information in the (first) codebook from becoming random or semantically meaningless. On the other hand, if the auxiliary classifier were instead trained after the first (spoof) encoder, then it is less likely that all of the codebook vectors in the first codebook would be easily distinguishable (by the auxiliary classifier) based on authenticity. Therefore, it is particularly advantageous for the training of the encoders, the codebooks, and the decoder to occur simultaneously to training of the auxiliary classifier (e.g., in parallel), rather than the auxiliary classifier being trained separately.

Preferably, the steps of applying the first encoder, and applying the second encoder happen simultaneously (or in parallel). Alternatively, applying the first encoder and the second encoder may happen sequentially.

Preferably, for each training signal, the adjustment is based on minimising: a first loss between the reproduced training signal and the original training signal, and an auxiliary loss of the auxiliary classifier between the output indication and the label. The first loss between the reproduced training signal and the original training signal may be referred to as the "reconstruction loss". Other loss terms may be present for one or both of the encoders, such as a VQ objective term to guide the vector quantised embedding vectors towards an encoder output, and/or a commitment loss term to constrain how the vector quantised space is utilised.

The first loss and the auxiliary loss may be weighted in order to alter the relative size of the adjustments to the encoders, codebooks, decoder, and auxiliary classifier. This allows the training rates of the encoders, the decoder, the codebooks and the auxiliary classifier to be adjusted, which may help to avoid overtraining any one of them. The other loss terms (VQ objective and commitment loss) may also be weighted. Typically, some components of the system converge quicker than others, so it is advantageous to be able to control the training rates for each of the components so that all components of the system are trained more uniformly.

Optionally, the encoders, the codebooks, the decoder, and the auxiliary classifier may be adjusted using different subsets of the set of training signals. This allows the extent of the training of the encoders, the decoder, the codebooks, and the auxiliary classifier to be controlled, which may help avoid overtraining any one of them. Using different subsets of the set of training signals may be referred to as "freezing", since certain parts of the autoencoder are not always trained at the same time. In other words, certain components are not adjusted (i.e., the frozen components) when other components are adjusted.

The sub-periods may have a predetermined duration. For example, the predetermined duration may be between 1 ms and 100 ms. In one example, the predetermined duration may be 4 ms. In this way, different lengths of signal will result in a different number of sub-periods. Advantageously, this may ensure that the spoof detection is equally precise on many different lengths of input signal, since the number of sub-periods may be adjusted in order to keep the predetermined duration constant.

The signal may be divided into a predetermined number of sub-periods. In other words, the length of the sub-periods depends on the overall length of the signal. For example, all the input signals may be divided into 200 sub-periods. Advantageously, this means that the level of precision in the spoofing detection automatically adjusts relative to the length of the signal.

All the sub-periods may have the same duration. Such a configuration may be simpler to implement, and the output may be easier to interpret. Alternatively, the sub-periods may have a variable length. E.g., to provide a variable rate, vector quantised, variational auto-encoder. Advantageously, certain parts of an input signal may have a more precise spoof detection, such as a portion where a password is typically spoken by a user.

According to a third aspect of the present invention, there is provided an apparatus configured to perform the method as described above and herein. It will be appreciated that any method feature described herein may be provided as an apparatus feature, and vice versa.

According to a fourth aspect of the present invention there is provided a computer readable medium comprising instructions which, when executed by a processor, cause the processor to perform the method as described above and herein.

It will be understood that the present invention is described herein purely by way of example, and modifications of detail can be made within the scope of the invention.

**BRIEF DESCRIPTION OF DRAWINGS**

One or more embodiments will now be described, purely by way of example, with reference to the accompanying figures, in which:

Figure 1 shows an example of an audio signal where a section of the signal is fake;
Figure 2A shows a system including a vector quantisation variational autoencoder for representing the content of an input signal;
Figure 2B shows a content codebook of the system of Figure 2A;
Figure 3A shows a system according to the present invention for detecting partially spoofed signals;
Figure 3B shows a spoofing codebook of the system of Figure 3A; and
Figure 4 shows a system according to the present invention, formed from part of the system shown in Figure 3A.

## DETAILED DESCRIPTION

Some verification or authentication systems use the voice or appearance of a user. For example, during enrolment a user may initially provide a number of voice recordings (known as "utterances") to train a neural network; once trained, the network may be able to detect whether a subsequently provided utterance is spoken by the same user or by a separate user. If the network determines that the utterance is by the same user, then the authentication is successful, but if the utterance is from a different user, then the authentication fails. This may be useful as an alternative form of password and may be more secure since the voice is unique to each user of the system. While the signals discussed herein are generally audio signals, it will be appreciated that any of the following description may also apply to other types of signal, such as video signals or images, such as photos.

However, a non-authorised user may attempt to gain access by faking (or "spoofing") the signal. For a voice signal, this may involve training a separate network (e.g. a vocoder) to synthesize the voice of the authorised user (known as a "synthesis attack"), or a replay/playback attack. To prevent this, an authentication system may train a neural network to differentiate between genuine utterances and faked utterances, such as those obtained using synthesis or playback.

However, it is not always necessary for a non-authorised user to fake a complete recording of the authorised user; in some cases, only part of the signal may need to be modified or replaced to gain access. For example, a short word or phrase may be replaced to change the meaning of the overall recording, or to include a new word where a genuine recording cannot be obtained. In this case, only a small proportion of the resulting signal is actually fake, with the remainder of the signal being a genuine recording. This type of signal may be referred to as a "partially spoofed signal".

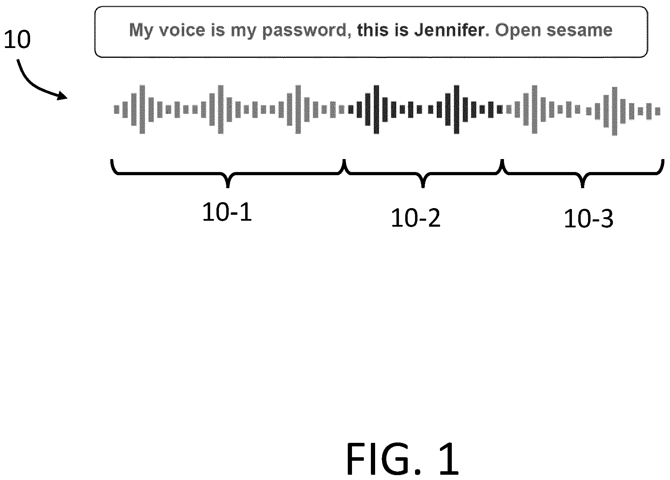

Figure 1 shows an example of a partially spoofed signal 10, where only part of the signal 10 has been faked. This may be achieved by replacing a section of the complete recording with a synthesized section or a section from a separate recording. In this example, a first section 10-1 is real, a second section 10-2 is fake, and a third section 10-3 is real. It will be appreciated that other recordings may have multiple fake sections that may each have different durations.

Even when an authentication system includes a neural network to detect spoofing, the system may still encounter problems when dealing with partially spoofed signals. Particularly where the fake section 10-2 is short, such as a single word or short phrase, such an authentication system may struggle to detect that any of the signal is fake, and thus the non-authorised user may be wrongly granted access. In other words, this type of authentication is only able to analyse the signal as a whole and take an average, and therefore may struggle with recordings that are mostly (but not entirely) real. Furthermore, even if the authentication system did indicate that the overall signal was faked, it would not be able to indicate which specific part(s) of the signal was fake.

One approach to address the above is to first slice the signal into separate sections, and individually analyse each of the sections with the authentication system. However, this approach is computationally intensive, and requires several passes using the algorithm, which makes it unsuitable for running on edge devices. It also requires the size of the sections (known as "window size") to be determined in advance, and if the window size changes, then further passes through the algorithm are also required, which makes the process inefficient for detection of a faked single word, for example.

Methods and systems will now be described which address the problems discussed above. The methods and systems use an autoencoder, having at least one encoder, a vector quantised (VQ) codebook, and at least one decoder. In this example, the autoencoder is a vector quantization variational autoencoder (VQ-VAE), though it will be appreciated that any autoencoder with a quantised latent space may be used.

## Introduction to Vector Quantization Variational Autoencoders (VQ-VAE)

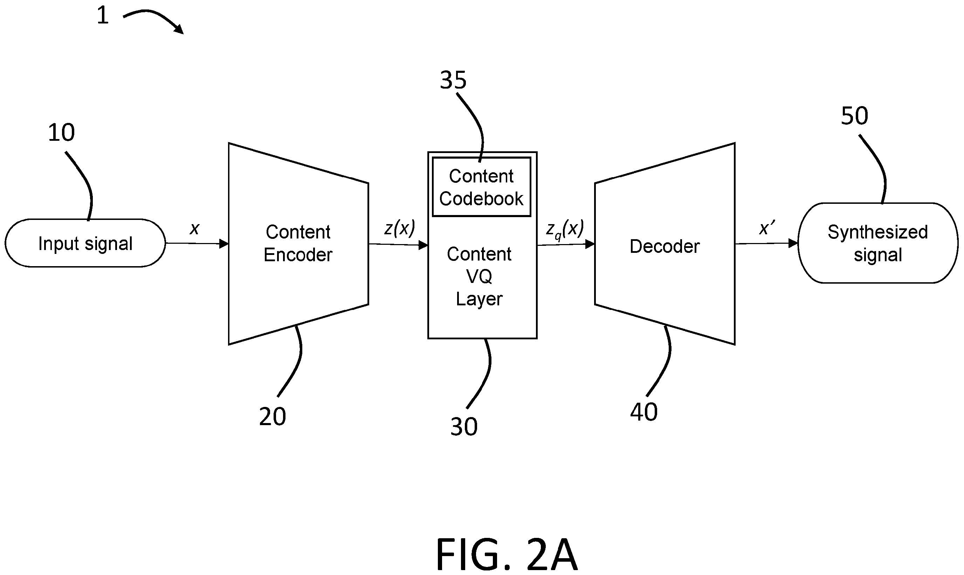

VQ-VAEs are adapted for representing discrete characteristics of signals, and therefore are generally used for speech synthesis and representation learning, such as how to represent phones (i.e. the speech sounds that form words), speaker identity (limited to speakers in the training set), and prosody (the rise and fall of intonation throughout an utterance). An example of a typical VQ-VAE system 1 is shown in Figure 2A.

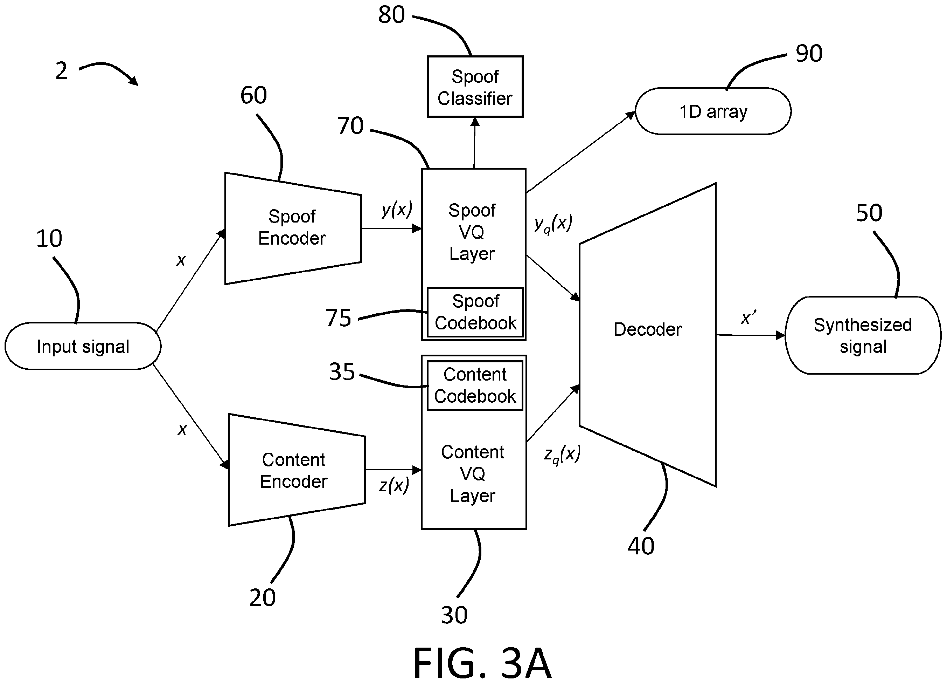

The system 1 has three components, an encoder 20, a vector quantization (VQ) layer 30 including a vector quantized codebook 35, and a decoder 40. The vector quantization layer 30 represents the signal in a latent space of discrete vectors. The encoder 20 and the decoder 40 are neural networks, which each have a number of layers interconnected with each other with corresponding weights and biases. In this example, the components of the VQ-VAE system 1 are trained to represent the content of the input signal 10. Accordingly, the encoder 20 may be referred to as a content encoder 20, and the vector quantized codebook 35 may be referred to as a content codebook 35. However, as will be described later in relation to the system 2 shown in Figure 3A, other components may be included for other purposes, such as to represent the authenticity of the input signal 10.

As shown in Figure 2A, an input array *(x)* representing the input signal 10 is provided to the encoder 20. The size and structure of the input array *(x)* may depend on properties of the input signal 10 such as its length. The input array *(x)* may be a 1-dimensional array (i.e., an "input vector"). The length of the input vector *(x)* may correspond to the number of samples in the input signal 10; for example, a 1-second-long piece of audio with a sample rate of 16kHz will result in an input vector with 16000 entries. Where the input signal 10 includes images (e.g. a photo or video signal), the signal may be represented as an input array with two or more dimensions (such as to account for the resolution and/or the number of colour channels); this input array *(x)* may be reshaped into a (1-dimensional) input vector *(x)* before being provided to the encoder 20. Alternatively, the encoder 20 may receive an input array *(x)* having two or more dimensions. It will be appreciated that any of the arrays or vectors described herein may be "reshaped" or "flattened" throughout the method to change the number of dimensions without changing the underlying operational principles described herein. Therefore, as used herein, the term "array" may refer to either a 1-dimensional vector or an array with two or more dimensions.

The encoder 20 gives a corresponding encoder output array *(z(x))* based on the input array *(x)*. The output *(z(x))* may be an m-dimensional array of continuous values, though as mentioned above, this array is preferably a 1-dimensonal vector (e.g., due to reshaping or flattening). This output may also be referred to as $z_e(x)$. The size of the output *(z(x))* is reduced compared to the size of the input vector *(x)*. The extent of this reduction may be described by the "downsample factor", which depends on the convolutional stride and kernel size. For example, if the stride is s = 2 and this stride is used in 6 convolutional layers (e.g., out of a total of 10 convolutional layers), then the downsampling factor (or "compression ratio") is given by $2^6 = 64$. For a content encoder 20, it has been found that that a downsample factor of about 64 is generally sufficient to allow for the input signal 10 to be reconstructed.

The input signal 10 comprises a plurality of sub-periods, and the output *(z(x))* may therefore comprise a plurality of (continuous) vectors, each one corresponding to a sub-period of the input signal 10. The plurality of vectors may be structured as a single vector, where the plurality of vectors are flattened and arranged sequentially in the output *(z(x))*; alternatively the output *(z(x))* may arrange the plurality of vectors in a higher dimensional array, such as a matrix with each column containing a vector corresponding to each sub-period. Accordingly, every sub-period of the input signal 10 is processed by the encoder 20 in a single inference pass.

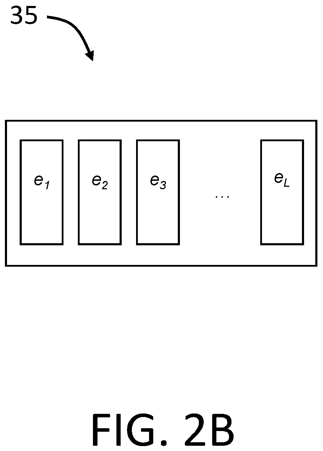

For VQ-VAE, this output *(z(x))* is quantized by the content VQ layer 30 onto a discrete set *(e)* of embedding vectors. This set of vectors *(e)* is stored in the content codebook 35, where each embedding vector may be identified by a particular indicator, which is represented herein using a subscript. An example of the content codebook 35 is shown in Figure 2B, where the content codebook 35 has $L$ embedding vectors $e_1 ... e_L$ (i.e., with the indicator counting from 1 to a maximum indicator of L). For a content encoder 20, the number of vectors in the codebook 35, $L$, may be 128 or 256, and each vector may have size of 128, though it will be appreciated that different values may be used.

The output of the quantization may be referred to as $z_q(x)$. As a result of the quantization, this output may comprise a plurality of (quantized) vectors, each one corresponding to a sub-period of the input signal 10, and each one being given by one of the codebook vectors *(e)*. For example, if an input signal 10 has a length of 2.8 seconds and a sample rate of 16 kHz, the input vector *(x)* may have 44800 components, each one corresponding to one of the samples. If an encoder 20 is applied that divides the input signal 10 into 250 sub-periods per second, then the output of the quantization $z_q(x)$ will include one quantized vector for every 64 samples in the original signal (i.e., a total of 700 quantized vectors represented by 700 corresponding VQ codes).

This output *($z_q(x)$)* may be input to the decoder 40, in order to provide a decoder output *(x')* representing a synthesized signal 50. Where the system 1 is used for audio signals, the decoder 40 may be referred to as a "vocoder" since it effectively generates a synthesized audio signal 50 based on vectors *(e)* from the content codebook 35. Any neural-based vocoder could be used for the decoder 40, such as WaveNet or WaveRNN.

The codebook 35 provides "local conditioning" to the decoder 40, rather than global conditioning, which means that for every sub-period of the input signal 10, there is a corresponding codebook vector *(e)* provided as input to the decoder 40. Depending on how the system 1 is configured and trained, the sub-periods may have a predetermined duration, such as a value between 1 ms and 100 ms.

Alternatively, the input signal 10 may be divided into a fixed number of sub-periods, such as 200 sub-periods (which may be suitable for audio recordings with a duration of about 10 seconds). In either case, all the sub-periods preferably have the same duration, but this is not a requirement for the system 1 to function.

The training process for the system 1 will now be briefly described. Training of the system 1 is based upon a loss function. A set of training signals is supplied to the system 1. For each training signal, the components of the system 1 are updated in order to minimize the loss function, using a process known as "backpropagation". In this way, the weights and biases of the neural networks, and codebook vectors may be adjusted using each of the training signals.

For the VQ-VAE system 1 described above, in order to control the training rates of the encoder 20, VQ layer 30, and decoder 40, the loss function *(L)* is typically governed by three terms:

$$L = L_R + \alpha L_{VQ} + \beta L_C$$

The $L_R$ term is known as the "reconstruction loss", defined as *(- log p(x|$z_q(x)$))*, which is the negative log likelihood of decoder output *(x)* given the output of the encoder after quantization *($z_q(x)$)*. This term acts to reduce the difference between the input signal 10 and the synthesized signal 50. When the reconstruction error is sufficiently low, this indicates that the codebook 35 have been trained and the learned latent space is therefore "rich" with information. If the reconstruction error is very high, then the information learned in the codebook 35 is considered to be unreliable since the original signal 10 cannot be recovered from it.

The $L_{VQ}$ term is known as the "VQ objective", which is an $l_2$ loss term defined as $\|sg[z_e(x)]\text{-}e\|_2{}^2$. Since the gradient operator bypasses the codebook 35, the VQ objective term guides the VQ embedding vectors *(e)* towards encoder output *($z_e(x)$)*. The "sg" term is a stop-gradient operator which creates a non-updated constant. The purpose of the VQ objective term is to ensure that embeddings are also guided by reconstruction loss.

The $L_c$ term is known as the "commitment loss", defined as $\|z_e(x)\text{ - }sg[e]\|_2{}^2$ to ensure that the encoder 20 commits to a VQ embedding vector *(e)* and constrains how the VQ space is utilized.

Once trained, the set of vectors *(e)* in the codebook 35 may represent discrete characteristics of the signal, though these characteristics are not typically interpretable; for example, for a voice signal, each vector *(e)* may represent a particular sound or phoneme of human speech.

**Partial anti-spoofing system**

The system 1 described above does not typically provide spoof detection for the input signal. As mentioned previously, spoof detection is typically provided using a separate neural network, which takes the entire signal as input and outputs a single indication that spoofing may be present somewhere in the signal. Where more granular detection is required, a neural network may be applied several times to sub-sections of the overall signal, which increases computational load and processing time. In order to address this, Figure 3A shows a VQ-VAE system 2 that can perform partial anti-spoofing.

The system 2 may also be described as an autoencoder, and shares a number of components with the system 1 described above, such as the content encoder 20, content VQ layer 30 including a content codebook 35, and a decoder 40. Unless specified otherwise below, these components correspond to those described in relation to the system 1.

The system 2 differs in that it also includes a spoof encoder 60. Similarly to the content encoder 20, the spoof encoder 60 is a neural network. The spoof encoder 60 takes the input signal 10 and downsamples it, where the amount of downsampling correlates with the convolutional stride and kernel size. The spoof encoder 60 outputs an n-dimensional array of continuous values. Since the input signal 10 comprises a plurality of sub-periods, the n-dimensional array may comprise a plurality of (continuous) vectors, each one corresponding to a sub-period of the input signal 10. As discussed above, the n-dimensional array may arrange the plurality of vectors as a single vector, where the plurality of vectors are flattened and arranged sequentially; alternatively, the n-dimensional array may arrange the plurality of vectors in a higher dimensional array, such as a matrix with each column containing a vector corresponding to each sub-period.

As mentioned previously, the sub-periods may have a predetermined duration, such as a value between 1 ms and 100 ms. Alternatively, the input signal 10 may be divided into a fixed number of sub-periods, such as 200 sub-periods (which may be suitable for audio recordings with a duration of about 10 seconds). In either case, all the sub-periods preferably have the same duration, but this is not a requirement for the system 2 to function.

The input signal 10 may be represented by an input array $x = (x_1, x_2, x_3 ...)$, where $x_i$ indicates a section of the array that represents the $i^{th}$ sub-period. As already described above in relation to the system 1, the input array is preferably a 1-dimensional vector *(x)*. The n-dimensional array may be represented as $y(x) = (y(x_1), y(x_2), y(x_3), ...)$, where $y(x_i)$ indicates a section of the n-dimensional array derived from the section $x_i$ of the input array *(x)*. In a similar way to the m-dimensional array in the system 1, the n-dimensional array $y(x)$ is preferably a 1-d array (i.e., a vector). Due to the downsampling, the overall size of $y(x)$ will be smaller than x itself.

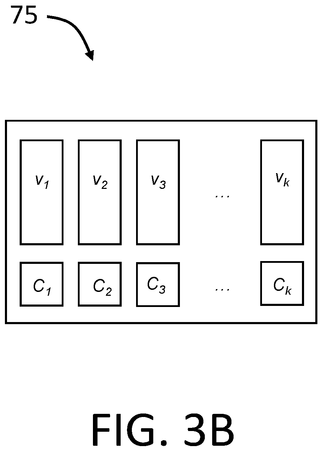

The output $y(x)$ of the spoof encoder 60 is quantized by a spoof VQ layer 70 onto a discrete set of embedding vectors *(v)*. This set of vectors is stored in a vector quantized codebook 75, referred to as the "spoof codebook" 75, where each embedding vector *(v)* may be identified by a particular indicator, which is represented herein using a subscript. An example of such a spoof codebook 75 is shown in Figure 3B, where the spoof codebook 75 has k embedding vectors $v_1 ... v_k$ (i.e., with the indicator counting from 1 to a maximum indicator of k). For the spoof encoder 60, the number of vectors in the spoof codebook 75, k, may be 128 or 256, and each vector may have a size of 128 or 256, though it will be appreciated that different values may be used. While the first embedding vector has been assigned an initial indicator of "1" it will be appreciated that the system may be implemented with the counting beginning at "0".

As a result of the quantization, the output of the spoof VQ layer 70 may comprise a plurality of (quantized) vectors, each one corresponding to a sub-period of the input signal 10, and each one being given by one of the codebook vectors *(v)*. As a specific example, for a particular input signal 10, the encoder output $y(x)$ may be quantised to provide the output $y_q(x) = (v_{19}, v_{96}, v_5, ... v_{24})$, where the subscript identifies a corresponding codebook vector *(v)* in the codebook 75 using its indicator. Preferably, each codebook vector *(v)* is concatenated so that the quantised output $y_q(x)$ is a 1-dimensional vector. The indicators (19, 96, 5, ... 24) identifying the codebook vectors may allow the input to the decoder 40 to be represented as only a small list of numbers, i.e. the indicators, rather than the complete 1-D vector $y_q(x)$.

As shown in Figure 3B, the spoof codebook 75 assigns each codebook vector *(v)* to a VQ code *(C)*, where there is a 1-1 correspondence between the VQ codes ($C$) and the embedding vectors ($v$). The VQ codes ($C$) may equivalently be referred to as codebook indices ($C$). For the spoof codebook 75, two values for the codebook indices ($C$) are possible; one for an authentic signal, and the other for a spoofed signal. In other words, the spoof codebook 75 may be referred to as having a size of 2. For example, a "0" may be used to represent an authentic sub-period, and a "1" may be used to represent a spoofed sub-period. In this way, an indication of authenticity may be provided using the spoof codebook 75 simply by looking up the codebook index ($C_i$) corresponding to the embedding vector ($v_i$) for the $i^{th}$ sub-period. The codebook indices ($C_i$) for all the sub-periods may be provided in a 1D array 90. For the specific example above, this 1D array 90 would be given by: ($C_{19}$, $C_{96}$, $C_5$, ... $C_{24}$), where the subscript indicates that each codebook index ($C$) in the array 90 corresponds to the codebook vector ($v$) that has the same indicator. Once the system 2 is trained to associate each codebook vector ($v$) with a codebook index ($C$), the 1D array 90 would be a vector of "1"s and "0"s such as (0, 0, 1, ... 0). In this way, every sub-period of the signal may quickly be identified as real or fake simply by looking at the corresponding entry in the 1D array 90. This 1D array 90 is produced in a single pass of the system 2.

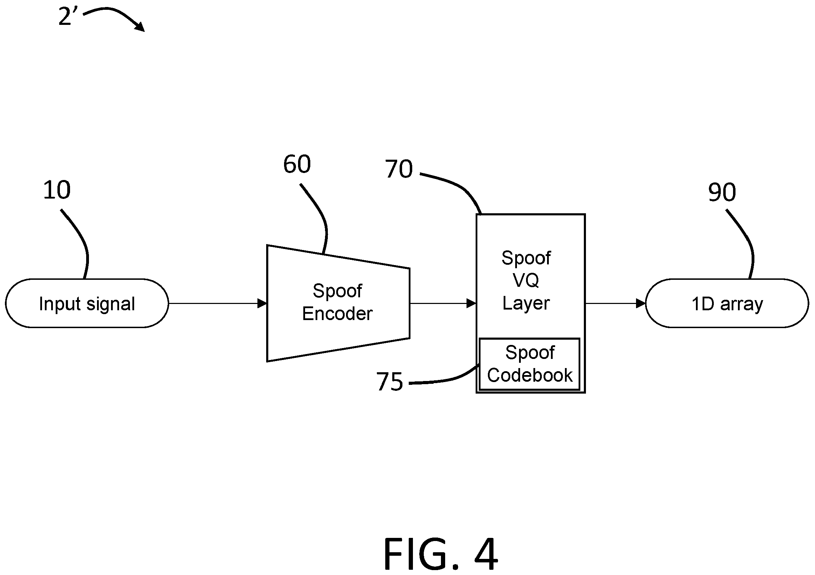

The assignment of codebook indices ($C$) to the embedding vectors ($v$) is provided by an auxiliary classifier 80, which is trained to identify whether a particular vector ($v_i$) stored in the spoof codebook 75 corresponds to a real or fake signal. Therefore, the auxiliary classifier 80 may be referred to as a "spoof classifier" 80. Once trained, all of the codebook vectors ($v$) will be assigned by the spoof classifier 80 to a first value (indicating a real sub-period), or a second value (indicating a fake sub-period). Therefore, the spoof classifier 80 may be considered to be a binary classifier. The purpose of the spoof classifier 80 is for training the spoof codebook 75; i.e. to guide how information is represented in the spoof codebook 75. As will be described later in relation to Figure 4, where an indication of authenticity is required, some components of the system 2 (including the spoof classifier 80) are not required.

In Figure 3A, the quantised outputs ($y_q(x)$, $z_q(x)$) of both the content VQ layer 30 and the spoof VQ layer 70 are passed into a single decoder 40, which produces an output vector ($x'$) representing a synthesized signal 50. The decoder 40 therefore accepts two types of VQ vectors: one for each sub-period representing content information (the output of content VQ layer 30), and one for each sub-period representing authenticity information (the output of spoof VQ layer 70). Similarly to the spoof classifier 80, the purpose of the decoder 40 is for training, and is not required for providing an indication of authenticity.

Training of the system 2 will now be described. Before any training occurs, the components of the system 2, including the codebook vectors ($e$, $v$) may be randomly initialised. Similarly to the system 1, a set of training signals is provided, and a loss function $L$ is calculated. In order to train the auxiliary classifier 80, each training signal also includes labels indicating the authenticity of each sub-period. The labels may be provided in a 1D array with each entry corresponding to a sub-period of the signal, thereby enabling easy comparison with the output 1D array 90.

The loss function ($L$) is given by:

$$L = L_R + \alpha\left(L_{VQ_C} + L_{C_C}\right) + \beta\left(L_{VQ_s} + L_{C_s}\right) + \eta\text{Aux}_s$$

The reconstruction loss $L_R$ is defined as above in the single encoder model (system 1), and therefore acts to reduce the difference between the input signal 10 and the synthesized signal 50.

The $L_{VQc}$ and $L_{VQs}$ terms represent two separate VQ objectives as already defined above; one for the content VQ layer 30 and another for the spoof VQ layer 70. These terms ensure that embeddings are also guided by reconstruction loss. Likewise, the $L_{Cc}$ and $L_{Cs}$ terms represent separate commitment losses, as previously defined. These terms ensure that the encoders 20, 60 each commit to embedding vectors, and constrain how the VQ space is utilized.

The $Aux_s$ term is an auxiliary loss for the spoof classifier 80, defined as the softmax or angular-softmax for the labels. Note that all components of the system 2 (including the spoof classifier 80) are trained using a single loss function; by training in this way, the spoof codebook 75 is guided towards meaningful vectors that can be easily distinguished by the spoof classifier 80. If the spoof classifier 80 were instead trained after the spoof codebook 75, then it is less likely that all of the codebook vectors ($v$) would be easily distinguishable based on authenticity. In this way, the spoof classifier 80 prevents the information in the spoof codebook 75 from becoming random or semantically meaningless.

The terms of the loss function $L$ include weights on the losses ($\alpha$, $\beta$, $\eta$) to help ensure that no component is over-contributing to the training of the system 2 as a whole. It is observed that some components of the autoencoder often converge quicker or slower than other components, so it is advantageous to weight the losses to train all the components of the autoencoder more uniformly. Note that further weights may be provided, such as to adjust relative training rates for the $L_{VQc}$ and $L_{VQs}$ terms and/or the $L_{Cc}$ and $L_{Cs}$ terms. Optionally, the terms may be weighted so that they have similar magnitudes.

The values of the weights can be determined experimentally. Optionally, a partial system may be trained (using pre-training) by freezing particular components of the autoencoder and then unfreezing those components to continue training. In other words, different components of the autoencoder may be trained on different subsets of the set of training signals. Advantageously, freezing certain components may reduce issues with over-fitting by individual components. The weights on the losses may also be varied during the training, rather than completely freezing components of the system.

Furthermore, as mentioned previously, once the system 2 is trained not all of its components are required in order to provide the indication of authenticity. Figure 4 shows a system 2', where the content encoder 20, the content VQ layer 30, the decoder 40 and the spoof classifier 80 have been discarded. As explained above, these components may be used for training of the system 2', but are not necessary for providing an indication of authenticity of the input signal 10. The training of the system 2 normally occurs in the cloud, but once trained, the system 2' may be deployed on edge devices, as explained below, or may continue operating in the cloud. While the system 2' omits all of those components, it will be appreciated that some or all of them may be retained, for example if a representation of the content of the input signal 10 were still important.

Therefore, a method of anti-spoofing using the system 2' may proceed as follows. First, an input signal 10 may be received, the signal having a time period comprising a plurality of sub-periods. Then the trained spoof encoder 60 may output an n-dimensional array of continuous values parameterising the authenticity of each sub-period. Subsequently, based on the trained spoof codebook 75 of the spoof VQ layer 70, an indication of authenticity of the at least one sub-period may be generated. While this indication may be for only some of the sub-periods, preferably the indication comprises a 1D array 90 with each entry corresponding to a sub-period of the input signal 10. In this case, the 1D array 90 is populated with the codebook indices ($C_i$) corresponding to the embedding vector ($v_i$) for the $i^{th}$ sub-period of the input signal 10. Therefore, the 1D array 90 may be given by a vector such as (0, 0, 0 ... 0, 0, 1, 1, 1, 1, 0, 0, ... 0), with the string of "1"s indicating that that part of the input signal 10 was faked.

It will be appreciated that this approach has the following advantages:

Firstly, the systems 2, 2' can more reliably detect spoofing even when only a small part of the overall signal, since the spoof detection is not dependent upon an average of the signal as a whole.

Secondly, the systems 2, 2' not only detect the presence of spoofing; systems 2, 2' may also specify exactly where in the signal the spoofing occurs, simply by matching the entries of the 1D array 90 to the sub-periods of the input signal 10.

Thirdly, the partial anti-spoofing is achieved using a single inference pass. This is much more efficient that other approaches which require a neural network to be individually operated multiple times for smaller sections of the input signal 10. Due to the repeated data modification, data transmission and multiple operations of the network, these approaches would be completely unsuitable for use on edge devices. By contrast, the present systems 2, 2' are able to detect spoofed portions within the input signal 10 with a single operation. This is much quicker and allows for a result to be provided in real time or near real time. Additionally, it substantially saves computing power and reduces repeated transmission and modification of data. This makes the method suitable for use on edge devices, and may be run in ultra-low power environments or where there are other constraints upon resources.

While the foregoing is directed to exemplary embodiments of the present invention, it will be understood that the present invention is described herein purely by way of example, and modifications of detail can be made within the scope of the invention. Furthermore, one skilled in the art will understand that the present invention may not be limited by the embodiments disclosed herein, or to any details shown in the accompanying figures that are not described in detail herein or defined in the claims. Indeed, such superfluous features may be removed from the figures without prejudice to the present invention.

Moreover, other and further embodiments of the invention will be apparent to those skilled in the art from consideration of the specification, and may be devised without departing from the basic scope thereof, which is determined by the claims that follow.

**Claims**

1. A method of anti-spoofing for identifying the authenticity of sub-periods of an audio or video signal, the method comprising:

receiving an audio or video signal having a time period comprising a plurality of sub-periods;
applying a trained encoder, the trained encoder configured to output an n-dimensional array of continuous values parameterising the authenticity of each sub-period, wherein the encoder is trained as part of an autoencoder, the autoencoder having at least one encoder, at least one vector quantised codebook, and at least one decoder; and
outputting an indication of the authenticity of at least one sub-period based on the n-dimensional array and the at least one vector quantised codebook;

wherein the autoencoder is trained using training data comprising a set of training audio or video signals, sub-periods of the training audio or video signals being associated with respective labels of whether said sub-periods are real or fake.

2. The method of claim 1, wherein the output indication comprises a 1-dimensional array with each entry corresponding to a sub-period of the signal.

3. The method of claim 2, wherein each entry of the 1D array takes either a first value indicating that the sub-period is real, or a second value indicating that the sub-period is fake.

4. The method of claim 2 or 3, wherein the autoencoder is a vector quantised autoencoder, where the n-dimensional array contains a plurality of vectors corresponding to each sub-period of the signal, each vector being quantised onto a codebook vector stored in a codebook, and each codebook vector having a codebook index identifying it as real or fake, wherein each entry of the 1D array is based on a corresponding codebook index.

5. The method of any preceding claim, wherein the autoencoder is a vector quantised variational autoencoder (VQ-VAE).

6. The method of any preceding claim, wherein the trained encoder is a trained spoof encoder, and the method further comprises applying a trained content encoder configured to generate a second, m-dimensional array of values parameterising the content of each sub-period, wherein the second encoder is trained as part of the autoencoder.

7. The method of claim 6, further comprising:

> quantising the output of the spoof encoder onto vectors in a first set of codebook vectors stored in a first codebook, the first codebook representing the authenticity of the first set of codebook vectors;
> quantising the output of the content encoder onto vectors in a second set of codebook vectors stored in a second codebook, the second codebook representing the content of the second set of codebook vectors; and
> applying at least one decoder to the quantised vectors from the spoof encoder and the content encoder to generate a reproduction of the signal.

8. A method of training an encoder as part of an autoencoder to identify the authenticity of sub-periods of an audio or video signal, the method comprising:

> providing a set of training signals, each training signal having a plurality of sub-periods associated with a respective plurality of labels of whether the sub-period is real or fake, and
> for each training signal, performing the steps of:
>
>> applying a first encoder to the training signal, the first encoder configured to output an n-dimensional array of continuous values parameterising the authenticity of each sub-period;
>> quantising the output of the first encoder onto vectors in a first set of codebook vectors stored in a first codebook, the first codebook representing the authenticity of the first set of codebook vectors;
>> using an auxiliary classifier to output an indication of the authenticity of at least one sub-period based on the codebook vectors;
>> applying a second encoder to the training signal, the second encoder configured to output an m-dimensional array of continuous values parameterising the content of each sub-period;
>> quantising the output of the second encoder onto vectors in a second set of codebook vectors stored in a second codebook, the second codebook representing the content of the second set of codebook vectors;
>> applying at least one decoder to the quantised vectors from the first encoder and the second encoder to generate a reproduction of the training signal; and
>> adjusting at least one of the encoders, the decoder, the codebooks and the auxiliary classifier using the reproduction of the training signal, the original training signal, the plurality of labels, and the output indication.

9. The method of claim 8, wherein, for each training signal, the adjustment is based on minimising:

> a first loss between the reproduced training signal and the original training signal, and
> an auxiliary loss of the auxiliary classifier between the output indication and the label.

10. The method of claim 9, wherein the first loss and the auxiliary loss are weighted in order so as to alter the relative size of the adjustments to the encoders, codebooks, decoder, and auxiliary classifier.

11. The method of any of claims 8 to 10, wherein the encoders, the codebooks, the decoder, and the auxiliary classifier are adjusted using different subsets of the set of training signals.

12. The method of any preceding claim, wherein the sub-periods have a predetermined duration.

13. The method of any of claims 1 to 11, wherein the signal is divided into a predetermined number of sub-periods.

14. The method of any preceding claim, wherein all the sub-periods have the same duration.

15. An apparatus configured to perform the method of any of claims 1 to 14.

16. A computer readable medium comprising instructions which, when executed by a processor, cause the processor to perform the method of any of claims 1 to 14.

My voice is my password, **this is Jennifer.** Open sesame

10

10-1    10-2    10-3

EP 4 503 030 A1

FIG. 1

FIG. 2A

FIG. 2B

FIG. 3A

EP 4 503 030 A1

FIG. 3B

FIG. 4

## EUROPEAN SEARCH REPORT

**Application Number**

EP 23 18 8806

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHIXI CAI ET AL: "Glitch in the Matrix: A Large Scale Benchmark for Content Driven Audio-Visual Forgery Detection and Localization", ARXIV.ORG, CORNELL UNIVERSITY LIBRARY, 201 OLIN LIBRARY CORNELL UNIVERSITY ITHACA, NY 14853, 16 July 2023 (2023-07-16), XP091564269, * abstract; figures 4,5 * * section 4 and subsections * | 1-16 | INV. G10L25/51 G06V40/40 G10L25/30 G06N3/02 |
| A | ZHANG BOWEN ET AL: "Localizing Fake Segments in Speech", 2022 26TH INTERNATIONAL CONFERENCE ON PATTERN RECOGNITION (ICPR), IEEE, 21 August 2022 (2022-08-21), pages 3224-3230, XP034236190, DOI: 10.1109/ICPR56361.2022.9956134 [retrieved on 2022-11-29] * abstract; figures 1, 4-6 * * page 3226, right-hand column, line 4 - page 3227, right-hand column, line 14 * | 1-16 | |
| A | LIN ZHANG ET AL: "The PartialSpoof Database and Countermeasures for the Detection of Short Fake Speech Segments Embedded in an Utterance", ARXIV.ORG, CORNELL UNIVERSITY LIBRARY, 201 OLIN LIBRARY CORNELL UNIVERSITY ITHACA, NY 14853, 30 January 2023 (2023-01-30), XP091424059, DOI: 10.1109/TASLP.2022.3233236 * abstract; figure 2 * * page 7, left-hand column, line 15 - page 8, right-hand column, line 30 * | 1-16 | **TECHNICAL FIELDS SEARCHED (IPC)** G10L G06N G06V |

-/--

The present search report has been drawn up for all claims

| Place of search | Date of completion of the search | Examiner |
|---|---|---|
| Munich | 18 January 2024 | Zimmermann, Elko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

**EP 23 18 8806**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SANJAY SAHA ET AL: "Undercover Deepfakes: Detecting Fake Segments in Videos", ARXIV.ORG, CORNELL UNIVERSITY LIBRARY, 201 OLIN LIBRARY CORNELL UNIVERSITY ITHACA, NY 14853, 16 May 2023 (2023-05-16), XP091508734, * abstract; figures 1,2 * * section III. Methodology * * section III.A Model architecture * ----- | 1-16 | |

TECHNICAL FIELDS
SEARCHED (IPC)

The present search report has been drawn up for all claims

| Place of search | Date of completion of the search | Examiner |
|---|---|---|
| Munich | 18 January 2024 | Zimmermann, Elko |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)